# EUROPÄISCHE PATENTANMELDUNG

(11) **EP 1 529 897 A1**
(43) Veröffentlichungstag der Anmeldung: **11.05.2005**
(21) Anmeldenummer: 03028466.5
(22) Anmeldetag: 12.12.2003
(51) Int. Cl.: E04F 19/04, F16B 5/06

(54) **Befestigungsclip**

(30) Priorität: 04.11.2003 DE 10352134
(71) Anmelder: Kottmann, Heinz, 33142 Büren (DE); Schnieders, Friedhelm, 33154 Salzkoten (DE); Kroener, Burkhard, 33142 Büren (DE)
(72) Erfinder: Kottmann, Heinz, 33142 Büren (DE); Schnieders, Friedhelm, 33154 Salzkoten (DE); Kroener, Burkhard, 33142 Büren (DE)
(74) Vertreter: Flügge, Christian

(57) **Zusammenfassung**

Für das Festlegen einer mit einer unterseitigen, vertikalen Nut 13 versehenen Fußleiste 12 ist ein Befestigungsclip 1 vorgesehen, der einen L-förmigen Abschnitt 2 mit einer aufgehenden Rückwand 4 und einen Fuß 3 aufweist, der einen Bodenbelag 6 untergreift, sowie einen gegenüberliegend dem Fuß 3 an die Rückwand 4 angeschlossenen, ringförmig gegen den Fuß 3 gebogenen Gegenbogen 9, der über dem Fuß 3 ein Dach 10 ausbildet, und eine von dem Dach 10 aufgehende Feder 11 für ein Eingreifen in die Nut 13 der Fußleiste 12.

## Beschreibung

Die Erfindung betrifft einen Befestigungsclip für das Festlegen einer Fußleiste.

Fußleisten werden regelmäßig verwendet, um einen sauberen Abschluss zwischen einem Bodenbelag und bspw. einem aufgehenden Mauerwerk oder einer anderweitigen anschließenden vertikalen Wand herzustellen. Es ist bekannt, derartige Fußleisten aus Holz, Holzersatzwerkstoffen oder Kunststoffen unmittelbar mit Nägeln, Schrauben und Dübeln oder dergleichen an einer solchen Wand festzulegen.

Derartige Befestigungen erschweren das Austauschen der Fußleisten beispielsweise bei deren Beschädigung oder bei einer Änderung des Bodenbelages, wobei hier insbesondere an Laminat- und/oder Parkettböden gedacht ist, welche Bodenbeläge heute zumeist schwimmend auf einem Boden verlegt sind.

Für insbesondere ein nachträgliches Festlegen einer Fußleiste bei einem schwimmend verlegten Laminat- und/oder Parkettfußboden wird gemäß der Erfindung auf einen Befestigungsclip für das Festlegen einer mit einer unterseitigen, vertikalen Nut versehenen Fußleiste abgestellt, wobei der Befestigungsclip einen L-förmigen Abschnitt mit einer aufgehenden Rückwand und mit einem Fuß, der einen Bodenbelag untergreift, aufweist, so wie einen gegenüberliegend dem Fuß an die Rückwand angeschlossenen, ringförmig gegen den Fuß gebogenen Gegenbogen, der über dem Fuß ein Dach ausbildet, und eine von dem Dach aufgehende Feder für ein Eingreifen in die Nut der Fußleiste.

Die Festlegung der Fußleiste erfolgt damit nicht an der Wand, sondern nach Art einer Nut- und Federverbindung an einem Befestigungsclip, der seinerseits in einem Spalt zwischen dem Bodenbelag und einem aufgehenden Mauerwerk oder dergleichen Wand eingebracht und dort aufgrund von Federkräften verspannt wird. Dabei untergreift der Befestigungsclip hakenartig mit dem Fuß den Bodenbelag und stützt sich mit der aufgehenden Rückwand an beispielsweise dem Mauerwerk ab. Denn bei einem Zusammendrücken des Gegenbogens und der Rückwand bei in den Spalt eingesetztem Befestigungsclip wird auf den an dem Bodenbelag anliegenden Gegenbogen und die an der Wand anliegende Rückwand im Wesentlichen von dem Dach nach Art einer Blattfeder jeweils ein Anpressdruck ausgeübt. So festgelegt bedarf es lediglich noch eines Aufsteckens einer mit einer an die aufgehenden Feder angepassten, unterseitigen Nut versehenen Fußleiste auf die Feder des Befestigungsclips.

Der Befestigungsclip nach der Erfindung kann als Kunststoffformteil ausgebildet sein, bevorzugt wird jedoch, dass er durch ein einstückiges Stanzteil aus einem Flachmaterial ausgebildet ist, insbesondere einem Band-Federstahl, womit zum einen eine ausreichende Elastizität und zum anderen eine ausreichende mechanische Stabilität gewährleistet ist. Insbesondere kann eine Formgebung durch nur eine einzige Stanzung mit anschließender Biegung erfolgen. Aufwändige Formen wie für Kunststoffformteile sind damit vermieden.

In einer konstruktiven Ausgestaltung ist vorgesehen, dass der Fuß einem freien Ende des Gegenbogens vorsteht. Aufgrund dieser Maßnahme ist sichergestellt, dass der Fuß den Bodenbelag sicher untergreift und der Gegenbogen über dem Fuß in einfacher Weise und weitgehend beliebig auswandern und sich damit veränderlichen Spaltbreiten auch anpassen kann.

Zweckmäßigerweise weist der Gegenbogen einen U-förmigen Ausschnitt auf, der nach oben gebogen die Feder ausbildet. Dabei ist von Vorteil, wenn die Feder in einer Seitenansicht U-förmig nach unten geöffnet ausgebildet ist, insbesondere bei einem Befestigungsclip aus einem Federstahl U-förmig nach unten gebogen ist. Ohne weiteren, zusätzlichen Materialaufwand oder beispielsweise Schweißnähte ist so die Feder als Stanzteil mit ausbildbar. Durch die U-Form ist die Feder darüber hinaus in der Nut verspannt gehalten.

In weiterer konstruktiver Ausgestaltung kann vorgesehen sein, dass in dem L-förmigen Abschnitt eine Lasche ausgeschnitten ist und dass die Lasche über den Fuß gebogen einen Anschlag für die Fußleiste ausbildet. In einfacher Weise wird so eine Positionierung der Fußleiste vor dem Befestigungsclip vorgegeben, so dass eine sichere Befestigung der Fußleiste ermöglicht ist. Hierbei ist es zweckmäßig, wenn die Breite des U-förmigen Ausschnitts größer bemessen ist als die Breite der Lasche und insbesondere die Lasche den U-förmigen Ausschnitt durchsetzt.

Bevorzugt ist die Länge der Lasche derart bemessen, dass bei der Anlage der Fußleiste an der freien Stirnseite der Lasche die Fußleiste gegen die Feder in der Nut verspannt wird und infolge dessen die Fußleiste ein Moment erfährt, durch das die obere Kante der Fußleiste gegen eine aufgehende Wand gedrückt und die Fußleiste insgesamt verklemmt wird.

In weiterer Ausgestaltung des Befestigungsclips nach der Erfindung ist vorgesehen, dass neben der Lasche zwei Streifen mit ihren freien Enden oben liegend freigeschnitten und abgewinkelt nach außen der Rückwand mit ihren freien Enden vorstehen. Aufgrund der federnden Materialeigenschaften lässt sich der Befestigungsclip mit dem Fuß den Bodenbelag hakenartig untergreifend und mit der Rückwand an einem aufgehenden Mauerwerk abgleitend in den Spalt eindrehen, da die der Rückwand frei vorstehenden Enden der beiden Streifen dann nach innen federn. Es werden jedoch diese freien Enden bei dem Versuch eines Herausziehens des Befestigungsclips aus dem Spalt sich an dem Mauerwerk verhaken und dieses verhindern.

Die zu dem Befestigungsclip gehörige Fußleiste zeichnet sich dadurch aus, dass unterseitig eine einen den Bodenbelag überragenden Abschnitt des Befestigungsclips aufnehmende Ausnehmung vorgesehen ist, in der die freie Stirnseite der Lasche anliegt und die sich in einer vertikalen Nut für eine Aufnahme der Feder fortsetzt. Damit überdeckt die Fußleiste den Befestigungsclip völlig und wird von dessen Federkraft auch gegen ein aufgehendes Mauerwerk gehalten. Ggfs. kann hierzu auch die Feder noch nachgebogen werden.

Es kann dabei vorgesehen sein, dass die Ausnehmung rückwandseitig offen ist, wodurch die exakte und vollständige Anlage der Rückwand des Befestigungsclips an einem Mauerwerk gewährleistet ist.

Die Erfindung wird anhand der Zeichnung näher erläutert, in der lediglich ein Ausführungsbeispiel dargestellt ist. In der Zeichnung zeigt:
- Fig. 1: eine Seitenansicht des Befestigungsclips nach der Erfindung,
- Fig. 2: eine Frontansicht gem. des Pfeils II in Figur 1,
- Fig. 3: eine rückwärtige Ansicht gem. des Pfeils III in Figur 1 und
- Fig. 4: teilgeschnitten die Verwendung des Befestigungsclips für das Festlegen einer Fußleiste.

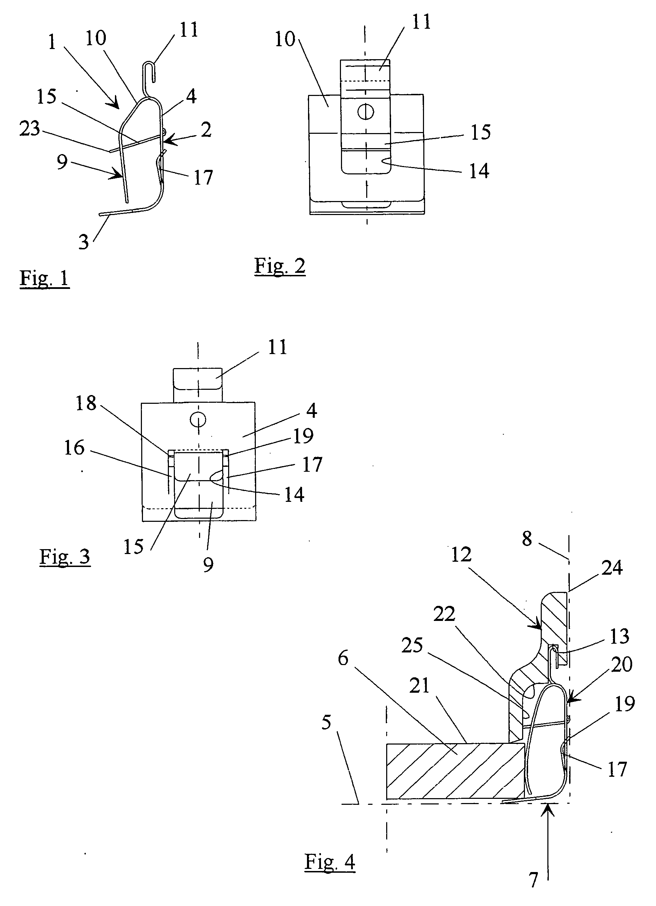

Der in einer Seitenansicht in Fig. 1 dargestellte Befestigungsclip 1, vorzugsweise aus einem Federstahl-Bandmaterial gestanzt, weist einen L-förmigen Abschnitt 2 mit einem Fuß 3 und einer Rückwand 4 auf. In Gebrauch untergreift der Fuß 3 einen Bodenbelag 6, vgl. Fig. 4, insbesondere einen auf einem Boden 5 schwimmend verlegten Laminat- und/oder Parkettboden. Der Befestigungsclip 1 wird in einem Spalt 7 zwischen dem Bodenbelag 6 und bspw. einem aufgehenden Mauerwerk 8 verklemmt, wozu ein an der Rückwand 4 angeschlossener Gegenbogen 9, der über dem Fuß 3 ein Dach 10 ausbildet, in der Seitenansicht gem. Fig. 1 das Profil des Befestigungsclips 1 gegen den Fuß 3 weitgehend schließt. Durch Zusammendrücken des über dem Fuß 3 hier frei endenden Gegenbogens 9 und der Rückwand 4 wird insbesondere in dem Dach 10 eine Federkraft aufgebaut, wodurch ein Verspannen der Rückwand 4 gegen das Mauerwerk 8 und des Gegenbogens 9 gegen den Bodenbelag 6 erfolgt.

Damit der Fuß 3 den Bodenbelag sicher untergreift, steht der Fuß 3 dem freien Ende des Gegenbogens 9 vorzugsweise auch in einem unbelasteten Zustand vor, vgl. Fig. 1, und vorzugsweise grundsätzlich in dem durch Federkraft belasteten Gebrauchszustand gem. Fig. 4.

Das Dach 10 trägt eine mit ausgestanzte Feder 11, die selbst nochmals U-förmig sich nach unten öffnend gebogen in einer unterseitig einer festzulegenden Fußleiste 12 eingebrachten Nut 13 aufgrund dieser Formgebung klemmend verriegelt. Für die Ausbildung der Feder 11 ist in dem Gegenbogen 9 wenigstens ein der totalen Länge der Feder 11 über alles entsprechender, U-förmiger Ausschnitt 14 vorgesehen.

Dieser Ausschnitt 14 weißt eine Breite auf, die derart bemessen ist, dass eine Lasche 15, U-förmig aus dem L-förmigen Abschnitt 2 ausgeschnitten und über den Fuß 3 nach innen hochgebogen, diesen Ausschnitt 14 durchsetzen und mit der freien Stirnseite 23 als Anschlag bei dem Ansetzen der Fußleiste 12 dienen kann, vgl. Fig. 4. Damit wird zum einen die Fußleiste exakt vor dem Befestigungsclip positioniert und zum anderen, da die Länge der Lasche 15 derart bemessen ist, dass bei einer Anlage der Fußleiste an der Stirnseite 23 die Fußleiste 12 gegen die Feder 11 in der Nut 13 verspannt wird, erfährt die Fußleiste 12 ein Drehmoment derart, dass die obere Kante 24 sicher gegen das Mauerwerk 8 gehalten ist.

Neben der Lasche 15 sind noch zwei Streifen 16,17 freigeschnitten, deren freie Enden 18,19 obenliegend angeordnet sind. Zunächst sind die Streifen 16,17 in das Innere des Befestigungsclips abgewinkelt und dann nach außen derart, dass die freien Enden 18,19 der Rückwand 4 vorstehen. Infolge werden die freien Enden 18,19 bei einem Eindrehen des Befestigungsclips 1 in den Spalt 7 an dem Mauerwerk 8 nach Innen federn und dieses Eindrehen ohne weiteres zulassen. Soll jedoch der Befestigungsclip 1 aus dem Spalt 7, beabsichtigt oder bspw. bei einer Belastung der Fußleiste 12 unbeabsichtigt, entfernt werden, so werden die freien Enden 18,19 gegen das Mauerwerk sich abstützend verkeilen und dies verhindern. Ein beabsichtigtes Entfernen des Befestigungsclips 1 ist jedoch durch Zusammendrücken der Rückwand 4 und des Gegenbogen 9 und damit einer Entlastung auch der vorstehenden freien Enden 18,19 unproblematisch.

Der Befestigungsclip 1 steht mit einem Abschnitt 20, im wesentlichen durch das hier schräg verlaufende Dach 10 ausgebildet, der Oberseite 21 des Bodenbelags 5 vor. Es weist deshalb die Fußleiste 12 eine unterseitige und hier rückwandseitig offene Ausnehmung 22 für eine Aufnahme dieses Abschnitts 20 noch auf, die sich in der Nut 13 fortsetzt. Daneben wird durch den vertikal aufgehenden Abschnitt der Innenwand 25 der Ausnehmung 22 eine Anschlagfläche 25 für die Stirnseite 23 der Lasche 15 ausgebildet.

### Bezugszeichenliste:

- 1.: Befestigungsclip
- 2.: Abschnitt
- 3.: Fuß
- 4.: Rückwand
- 5.: Boden
- 6.: Bodenbelag
- 7.: Spalt
- 8.: Mauerwerk
- 9.: Gegenbogen
- 10.: Dach
- 11.: Feder
- 12.: Fußleiste
- 13.: Nut
- 14.: Ausschnitt
- 15.: Lasche
- 16.: Streifen
- 17.: Streifen
- 18.: Ende
- 19.: Ende
- 20.: Abschnitt
- 21.: Oberfläche
- 22.: Ausnehmung
- 23.: Stirnseite
- 24.: Kante
- 25.: Innenwand

## Patentansprüche

1. Befestigungsclip (1) für das Festlegen einer mit einer unterseitigen, vertikalen Nut (13) versehenen Fußleiste (12), aufweisend einen L-förmigen Abschnitt (2) mit einer aufgehenden Rückwand (4) und mit einem Fuß (3) , der einen Bodenbelag (6) untergreift, einen gegenüberliegend dem Fuß (3) an die Rückwand (4) angeschlossenen, ringförmig gegen den Fuß (3) gebogenen Gegenbogen (9), der über dem Fuß (3) ein Dach (10) ausbildet, und eine von dem Dach (10) aufgehende Feder (11) für ein Eingreifen in die Nut (13) der Fußleiste (12).

2. Befestigungsclip nach Anspruch 1, **dadurch gekennzeichnet, dass** er durch ein einstückiges Stanzteil aus einem Flachmaterial ausgebildet ist.

3. Befestigungsclip nach einem oder mehreren der vorangehenden Ansprüche, **dadurch gekennzeichnet, dass** der Fuß (3) einem freien Ende des Gegenbogens (9) vorsteht.

4. Befestigungsclip nach einem oder mehreren der vorangehenden Ansprüche, **dadurch gekennzeichnet, dass** der Gegenbogen (9) einen U-förmigen Ausschnitt (14) aufweist, der nach oben gebogen die Feder (11) ausbildet.

5. Befestigungsclip nach einem oder mehreren der vorangehenden Ansprüche, **dadurch gekennzeichnet, dass** die Feder (11) in einer Seitenansicht U-förmig nach unten geöffnet ausgebildet ist.

6. Befestigungsclip nach einem oder mehreren der vorangehenden Ansprüche, **dadurch gekennzeichnet, dass** in dem L-förmigen Abschnitt (2) eine Lasche (15) ausgeschnitten ist und dass die Lasche (15) über den Fuß (3) gebogen einen Anschlag für die Fußleiste (12) ausbildet.

7. Befestigungsclip nach einem oder mehreren der vorangehenden Ansprüche, **dadurch gekennzeichnet, dass** die Breite des U-förmigen Ausschnitts (14) größer bemessen ist als die Breite der Lasche (15).

8. Befestigungsclip nach einem oder mehreren der vorangehenden Ansprüche, **dadurch gekennzeichnet, dass** die Lasche (15) den U-förmigen Ausschnitt (14) durchsetzt.

9. Befestigungsclip nach einem oder mehreren der vorangehenden Ansprüche, **dadurch gekennzeichnet, dass** die Länge der Lasche (15) derart bemessen ist, dass bei der Anlage der Fußleiste (12) an der freien Stirnseite (23) der Lasche (15) die Fußleiste (12) gegen die Feder (11) in der Nut (13) verspannt wird.

10. Befestigungsclip nach einem oder mehreren der vorangehenden Ansprüche, **dadurch gekennzeichnet, dass** neben der Lasche (15) zwei Streifen (16,17) mit ihren freien Enden (18,19) oben liegend freigeschnitten und abgewinkelt nach Außen der Rückwand (4) mit ihren freien Enden (18,19) vorstehen.

11. Fußleiste für einen Befestigungsclip nach einem oder mehreren der vorangehenden Ansprüche, **dadurch gekennzeichnet, dass** unterseitig eine einen den Bodenbelag (6) überragenden Abschnitt (20) des Befestigungsclips (1) aufnehmende Ausnehmung (22) vorgesehen ist, in der die freie Stirnseite (23) der Lasche (15) anliegt und die sich in einer vertikalen Nut (13) für eine Aufnahme der Feder (11) fortsetzt.

12. Fußleiste nach Anspruch 9, **dadurch gekennzeichnet, dass** die Ausnehmung (22) rückwandseitig offen ist.
